# EUROPÄISCHE PATENTSCHRIFT

(11) **EP 0 353 180 B1**
(45) Veröffentlichungstag und Bekanntmachung des Hinweises auf die Patenterteilung: **14.04.1993**
(21) Anmeldenummer: 89730171.9
(22) Anmeldetag: 25.07.1989
(51) Int. Cl.: E21B 17/042, E21B 17/00, F16L 15/00

(54) **Bohrrohr**
Drill pipe
Tube de forage

(30) Priorität: 28.07.1988 DE 3825992
(43) Veröffentlichungstag der Anmeldung: 31.01.1990
(73) Patentinhaber: MANNESMANN Aktiengesellschaft, 40027 Düsseldorf (DE)
(72) Erfinder: Krug, Gerhard, Dr.-Ing., D-4100 Duisburg 25 (DE)
(74) Vertreter: Presting, Hans-Joachim, Dipl.-Ing.

(56) Entgegenhaltungen:
- GB-A- 912 930
- GB-A- 2 101 700
- GB-A- 2 124 315
- US-A- 1 973 848
- US-A- 3 080 179

## Beschreibung

Die Erfindung betrifft ein Bohrrohr gemäß dem Gattungsbegriff des Hauptanspruches.

Ein Bohrrohr der gattungsmässigen Art ist bekannt, bei dem auf der Grundlage der einschlägigen API-Spezifikationen (z. B. API 5AX) Verbinder, die einmal als Zapfen- oder als Muffenelement ausgebildet sind, mit einem Rohr, dessen Enden angestaucht sind, mittels eines Schweißverfahrens verbunden sind. Siehe dafür auch z.B. GB-A.2124315. Für den Fall von nach innen bzw. nach innen und nach außen angestauchten Rohrenden, ist die lichte Weite im Verbinder immer geringer als die des unverformten Rohres, wobei der Sprung in der lichten Weite im Anstauchbereich des Rohres liegt und die zylindrische Bohrung des Verbinders eine gleichbleibende lichte Weite von der Schweißnaht bis zum Gewindeabschnitt aufweist. Es ist bekannt, daß mit zunehmender Bohrtiefe die zu übertragenden Kräfte und Momente im Rohr und im Verbinder stark ansteigen. Diese Belastungen können durch entsprechend höherfeste Werkstoffgüten, insbesondere höhere zulässige Streckgrenzenwerte oder durch größere tragende Querschnitte aufgefangen werden. Beim Rohr wird dieses Problem durch die Wahl einer entsprechend höherwertigen Güte gelöst, beim Verbinder ist dies nicht möglich, da einmal durch die API-Spezifikation ein bestimmter Gütegrad festgelegt ist und zum anderen, weil selbst von der API-Spezifikation abweichende höhere Festigkeiten nicht mit einer Steigerung der erforderlichen Zähigkeitswerte im Verbinder einhergehen. Deshalb muß in dem querschnittsbestimmenden Bereich des Gewindeabschnittes des als Zapfenelement ausgebildeten Verbinders, die tragende Querschnittsfläche vergrößert werden. Diese Vergrößerung der Fläche ist nur durch eine weitere radiale Verdickung nach innen möglich, da der maximale

Außendurchmesser des Verbinders im Zangenanschlagsbereich durch die Gegebenheiten der Abmessungen des Bohrloches festgelegt ist. Der verbleibende Ringraum zwischen Bohrgestänge und Futterrohr darf nicht zu klein werden, da ansonsten die Druckverluste der außen hochsteigenden Bohrspülung stark anwachsen. In der Konsequenz bedeutet dies, daß der Sprung in der lichten Weite im Anstauchbereich des Rohres immer größer wird. Die Herstellung einer immer größer werdenden Anstauchung wird fertigungstechnisch immer aufwendiger und die Kerbwirkung infolge des größeren inneren Überganges vom unverformten Rohr zum angestauchten Kopf ungünstiger. Des weiteren können sich an dieser Stelle beim Ablegen des Bohrrohres Reste des Bohrspülwassers sammeln und damit ein korrosiver Angriff stattfinden. Dieser Bereich wird damit zu einer nicht zu übersehenden kritischen Schwachstelle im Hinblick auf das Versagen unter Einsatzbedingungen.

Aufgabe der vorliegenden Erfindung ist es, ein Bohrrohr zu schaffen, das unter Beachtung der einzuhaltenden API-Vorschriften im Hinblick auf Minimierung der Druckverluste für die Bohrspülung und Anfälligkeit des Versagens an den kritischen Stellen für den Einsatz in großen Bohrtiefen geeignet und mit großer Fertigungssicherheit kostengünstig herzustellen ist.

Diese Aufgabe wird durch die kennzeichnenden Merkmale des Anspruches 1 gelöst. Vorteilhafte Weiterbildungen sind in den Unteransprüchen definiert.

Der Lösungsvorschlag zeichnet sich dadurch aus, daß trotz Beachtung der einschränkenden API-Vorschriften ein optimiertes Bohrrohr für große Bohrtiefen geschaffen wurde, das mit großer Fertigungssicherheit kostengünstig herzustellen ist und keine Schwachstellen für das Versagen unter Einsatzbedingungen aufweist. Dies wird dadurch erreicht, daß zum einen die erforderliche Anstauchung am Rohrende minimiert und der größere Anteil des Sprunges in der lichten Weite in den unkritischen Teil des Verbinders gelegt ist und zum anderen die jeweiligen inneren Übergänge stark abgerundet sind. Die Abrundungen wirken in der Weise, daß an dieser Stelle keine kritischen Kerbspannungen entstehen können und sie haben den zusätzlichen Effekt, daß Reste der Bohrspülung beim Ablegen der Rohre ungehindert abfließen können. Damit wird ein nicht erwünschter Korrosionsangriff an der Übergangsstelle wirksam verhindert. Die Reduzierung der Anstauchung am Rohrende hat den Vorteil, daß mit den üblichen, bereits vorhandenen Werkzeugen diese Anstauchung herzustellen ist und der Übergangsbereich mit abnehmender Anstauchung immer mehr sich der gewünschten idealen Krümmungslinie nähert. Bei großen Anstauchungen am Rohrende dagegen läßt sich die geometrische Form des Übergangsbereiches zum unverformten Rohrbereich nur schwer kontrolliert beeinflussen. Es entstehen dabei unerwünschte schroffe Übergänge, die dann Stellen für die Entstehung von Kerbspannungsspitzen sind, die dann wiederum Auslöser für das Versagen des Bohrrohres an dieser Stelle sind.

Die Größe der erforderlichen Mindestanstauchung für das Rohrende steht im Zusammenhang mit dem durch die Verbindungsschweißung von Rohr und Verbinder verursachten Streckgrenzenabfall in der wärmebeeinflußten Zone. Setzt man diesen Streckgrenzenabfall mit maximal 30 % an, wobei man damit auf der sicheren Seite liegt, dann ergibt sich gegenüber der Nennfläche des Rohres eine erforderliche um mindestens 30 % größere Querschnittsfläche in der Schweißnaht, um die Bedingung Querschnittsfläche (WEZ) x Streckgrenze (WEZ) gleich größer Querschnittsfläche (Rohr) x Streckgrenze (Rohr) zu erfüllen. Unter Berücksichtigung eines Sicherheitszuschlages beträgt der Querschnitt des Anstauchkopfes mindestens das 1,5fache des Querschnittes des unverformten Rohres. Die Querschnittsvergrößerung wird dadurch erreicht, daß entweder eine nur radial nach innen gerichtete Anstauchung, die aber wieder zu einem relativ großen Sprung in der lichten Weite führt oder vorteilhafterweise eine Anstauchung nach innen und außen vorgegeben wird, da der über den äußeren Durchmesser hinausgehende Durchmesser im Quadrat zur Flächenvergrößerung beiträgt. Üblich ist, daß die radial nach innen gerichtete Anstauchung größer ist als die nach außen gerichtete. Dabei liegen die Übergangsbereiche nicht gegenüber, sondern sind axial versetzt, wobei die innere Anstauchung die größere axiale Erstreckung aufweist.

Eine weitere geometrische Zwangsstelle ist der erforderliche Mindestquerschnitt zu Beginn des Gewindeabschnittes in dem als Zapfenelement ausgebildeten Verbinder. An dieser Stelle muß das Gewicht des angehängten Bohrgestänges und das Drehmoment sowie die durch das Verschrauben sich ergebende Kraft übertragen werden. Durch die Festlegung in der API-Vorschrift ist die Streckgrenze des Verbinders limitiert. Auch eine über die API-Vorschrift hinausgehende Festigkeitssteigerung für den Verbinder würde nicht weiterhelfen, da bedingt durch die Verdickung im Zangenanschlagsbereich die Zähigkeitswerte abfallen und nicht mehr den Mindestanforderungen genügen würden. Man könnte nun in einfacher Weise den äußeren Durchmesser des Verbinders vergrößern, um zu der erforderlichen Vergrößerung der tragenden Querschnittsfläche zu kommen. Dies wird aber beschränkt durch die Auflage, den maximal möglichen Durchmesser des Zangenanschlagbereiches den Abmessungen des Bohrloches anzupassen. Der verbleibende Ringraum zwischen Verbinder und Bohrloch darf nicht zu klein werden, da ansonsten die Druckverluste für die hochsteigende Bohrspülung zu stark ansteigen. Dies führt in der Konsequenz zu einer im wesentlichen radial nach innen gerichteten Verdickung und dies wiederum zu einem großem Sprung in der lichten Weite am Rohrende. Diese Zwangslage wird durch den Lösungsvorschlag überwunden, indem man den größten Teil des erforderlichen Sprunges in der lichten Weite in den unkritischen Teil des Verbinders verlegt. Dieser Bereich muß zum einen weit genug vom Gewindeabschnitt entfernt sein, damit Nachschnitte des Gewindes möglich sind, zum anderen aber im Zangenanschlagsbereich liegen, wo ein ausreichender Querschnitt zur Übertragung der Kräfte und Momente zur Verfügung steht. Der Übergangsbereich im Verbinder kann als Kegelstumpf ausgebildet sein oder Teil einer kreisbogenförmig gekrümmten Fläche sein, die tangential in den zylindrischen Teil, der der Schweißnaht zugewandt ist, übergeht. In jedem Fall ist der Übergang zum zylindrischen Teil stark abgerundet, um Kerbspannungen zu vermeiden. In der gleichen Richtung wirkt die schon bekannte Abrundung auf der Außenseite des Verbinders vom Schweißnahtbereich zum Zangenanschlagsbereich.

Für den als Muffenelement ausgebildeten Verbinder sind bei einer standardmäßigen um 18 Grad geneigten Schulter an der Außenseite diese Maßnahmen einer radial nach innen gerichteten Verdickung nicht erforderlich, da der Querschnitt im kritischen Bereich ausreichend ist, um eine durchgehend bis zum Rohr gleichbleibende zylindrische Bohrung aufrechtzuerhalten. Damit wird vermieden, die Anstauchung an den beiden Rohrenden ungleich zu machen. Die nach außen springende Sprungstelle am Übergang Ende Gewindeabschnitt des Zapfenelementes zum Anfang Gewindeabschnitt des Muffenelementes wird durch eine Abschrägung am Ende des Zapfenelementes entschärft. Für den Fall der Ausbildung einer 90 Grad-Schulter an der Außenseite des als Muffenelement ausgebildeten Verbinders ergibt sich durch den vorgeschriebenen kleinen Radius und der damit verbundenen Kerbwirkung eine Schwachstelle.

Zur Überwindung dieses Problems wird vorgeschlagen, auch im als Muffenelement ausgebildeten Verbinder an dieser Stelle eine radial nach innen gerichtete Verdickung vorzusehen. Der Beginn des Zwischenbereiches mit in Richtung Gewindeabschnitt abnehmender lichter Weise liegt dabei vor der Position der 90 Grad-Außenschulter, damit in dieser Position bereits ein etwas größerer Querschnitt zur Verfügung steht. Die Sprungverhältnisse brauchen im Vergleich zum Zapfen nicht so stark ausgeprägt zu sein, da zur Verstärkung nur eine geringe radiale Verdickung erforderlich ist. Dabei ist der Sprung in der lichten Weite im Anstauchbereich des Rohres sogar gleich oder nur etwas kleiner als der im Verbinder.

In der Zeichnung wird anhand zweier Ausführungsbeispiele das erfindungsgemäße Bohrrohr näher erläutert.

Es zeigen:
- Figur 1: einen Teil-Längsquerschnitt durch ein erfindungsgemäßes Bohrrohr mit dem angeschweißten als Zapfenteil ausgebildeten Verbinder
- Figur 2: wie Figur 1, jedoch mit dem als Muffenteil ausgebildeten Verbinder
- Figur 3: wie Figur 2, jedoch mit einem eine 90-Grad-Schulter aufweisenden Verbinder

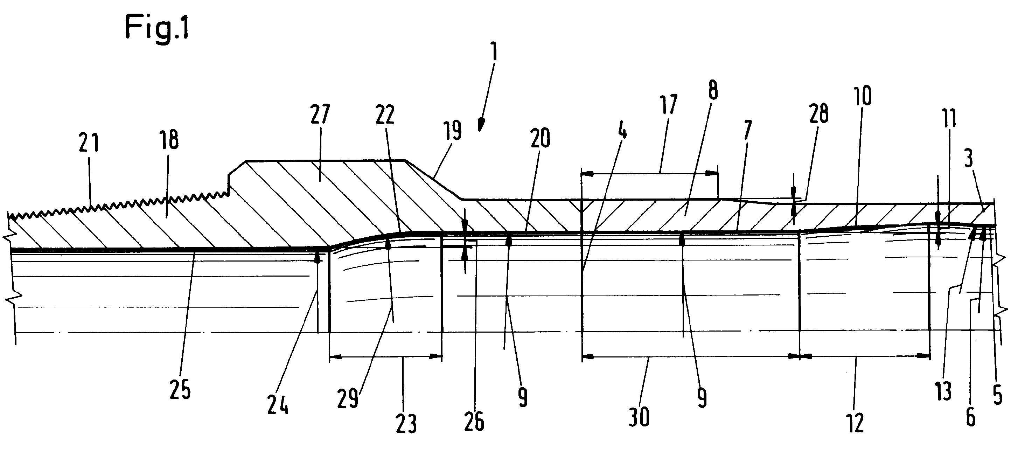

Figur 1 zeigt einen Teil-Längsquerschnitt durch ein erfindungsgemäßes Bohrrohr 1 mit einem angeschweißten als Zapfenteil ausgebildeten Verbinder 18. Der Verbinder 18 ist mit dem Rohr 3 durch eine Schweißnaht 4, z. B. hergestellt durch eine Reibschweißung, miteinander verbunden. Das Rohr 3 ist in Richtung Schweißnaht an seinem Ende angestaucht, wobei die Anstauchung in diesem Beispiel radial nach innen und nach außen gerichtet ist. Die axiale Erstreckung der radial nach außen 17, 17′ gerichteten Anstauchung ist kürzer als die der radial nach innen 30, 30′ gerichteten Anstauchung. Der Bohrungsabschnitt 5 des unverformten Rohres 3 hat eine lichte Weite, der dem eingezeichneten Pfeil 6 entspricht. Die lichte Weite des Bohrungsabschnittes 7 des Anstauchkopfes 8 ist geringer wie der eingezeichnete Pfeil 9 zeigt. Zwischen diesen beiden zylindrischen Bohrungsabschnitten 5, 7 erstreckt sich ein Zwischenabschnitt 10, der den Übergang zwischen den beiden Bohrungsabschnitten 5, 7 darstellt. In diesem Zwischenabschnitt 10 nimmt die lichte Weite in Richtung Schweißnaht 4 kontinuierlich ab, wobei die Differenz zwischen der größten und der kleinsten lichten Weite der eingezeichneten Strecke 11 entspricht. Die Länge dieses Zwischenabschnittes 10 ist mit dem Pfeil 12 gekennzeichnet, wobei diese mehr als das 10fache der Differenz der lichten Weite 6, 9 der beiden angrenzenden Bohrungsabschnitte 5, 7 beträgt. Der Übergang vom Bohrungsabschnitt 5 des unverformten Rohres 3 zum Zwischenabschnitt 10 ist stark abgerundet, wobei der Radius der Abrundung, hier dargestellt durch den Pfeil 13, mindestens 300 mm beträgt. Der in dieser Figur als Zapfenteil ausgebildete Verbinder 18 weist einen von der Schweißnaht 4 bis in den Schulterbereich 19 sich erstreckenden zylindrischen Bohrungsabschnitt 20 auf, dessen lichte Weite 9 gleich ist der des Anstauchkopfes 8 des angeschweißten Rohres 3. Daran schließt sich in Richtung Gewindeabschnitt 21 ein Zwischenabschnitt 22 mit abnehmender lichter Weite an. Die Länge dieses Zwischenabschnittes 22, hier dargestellt durch den Pfeil 23, beträgt mehr als das 3fache der Differenz der lichten Weite 9, 24 der beiden angrenzenden Bohrungsabschnitte 20, 25. Diese Differenz kann auch an der eingezeichneten Strecke 26 abgelesen werden. Das Ende dieses Zwischenabschnittes 22 liegt im Bereich des verdickten Zangenanschlagbereiches 27. In diesem Ausführungsbeispiel ist der Zwischenabschnitt 22 als kreisbogenförmig gekrümmte Fläche ausgebildet, die in den der Schweißnaht 4 zugewandten zylindrischen Bohrungsabschnitt 20 tangential übergeht. Der Radius 29 dieser kreisbogenförmig gekrümmten Fläche beträgt mindestens 150 mm. Die an der Außenfläche liegende Elevatorschulter 19 ist standardmäßig geneigt mit einem Winkel von 30 Grad.

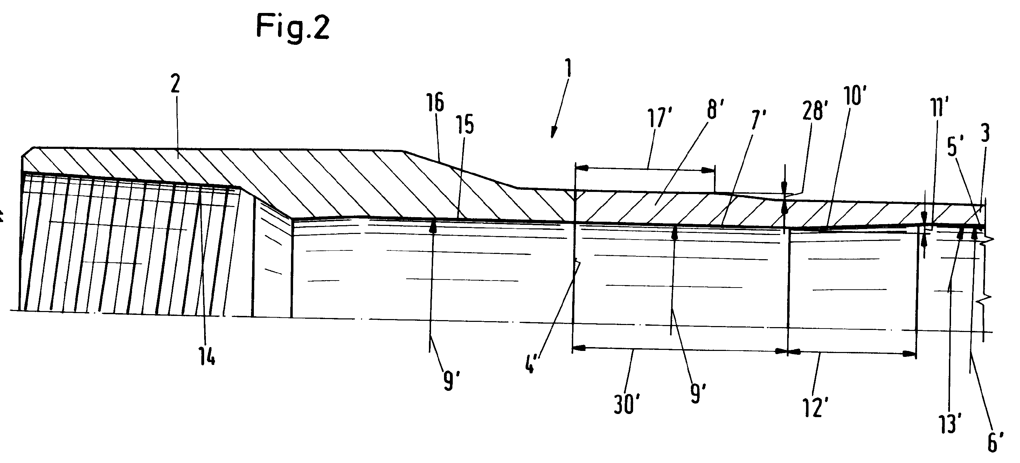

Figur 2 zeigt den gleichen Teil-Längsquerschnitt durch ein erfindungsgemäßes Bohrrohr 1 wie Figur 1, jedoch mit einem angeschweißten als Muffenteil ausgebildeten Verbinder 2, wobei gleiche Teile mit dem gleichen Bezugszeichen versehen sind. Der Verbinder 2 ist mit dem Rohr 3 durch eine Schweißnaht 4′, z. B. hergestellt durch eine Reibschweißung, verbunden. Das Rohr 3 ist in Richtung Schweißnaht 4′ an seinem Ende angestaucht, wobei die Anstauchung gleich ausgebildet ist, wie die am anderen Ende des Rohres 3 (siehe Figur 1). Der hier als Muffenteil ausgebildete Verbinder 2 weist eine von der Schweißnaht 4′ bis zum Ende des Gewindeabschnittes 14 sich erstreckenden zylindrischen Bohrungsabschnitt 15 auf, dessen lichte Weite 9′ gleich ist der des Anstauchkopfes 8′ des angeschweißten Rohres 3. Die an der Außenfläche liegende Elevatorschulter 16 ist standardmäßig geneigt mit einem Winkel von 18 Grad.

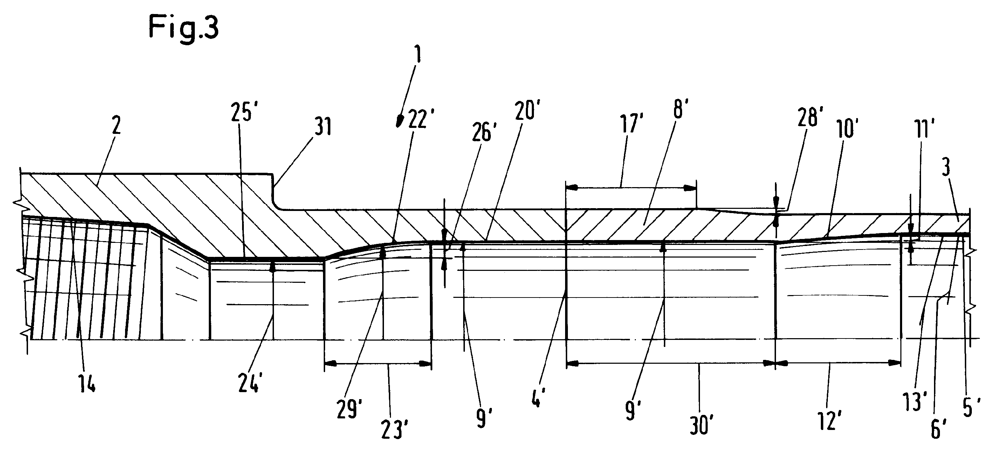

Figur 3 zeigt den gleichen Teil-Längsquerschnitt durch ein erfindungsgemäßes Bohrrohr 1 wie Figur 2, jedoch mit einem eine 90-Grad-Schulter 31 aufweisenden Verbinder 2, wobei gleiche Teile mit dem gleichen Bezugszeichen versehen sind. Der Verbinder 2 ist mit dem Rohr 3 durch eine Schweißnaht 4′ miteinander verbunden. Das Rohr 3 ist in Richtung Schweißnaht 4′ an seinem Ende angestaucht, wobei die Anstauchung gleich ausgebildet ist, wie die am anderen Ende des Rohres 3 (siehe Figur 1). Der hier ebenfalls wie in Figur 2 als Muffenteil ausgebildete Verbinder 2 weist einen von der Schweißnaht 4′ sich nur über einen bestimmten Teil des Verbinders sich erstreckenden zylindrischen Bohrungsabschnitt 20′ auf, dessen lichte Weise 9′ gleich ist der des Anstauchkopfes 8′ des angeschweißten Rohres 3. Daran schließt sich in Richtung Gewindeabschnitt 14 ein Zwischenabschnitt 22′ mit abnehmender lichter Weite. Dieser Zwischenabschnitt 22′ endet noch weit vor dem Beginn der steilen 90-Grad-Außenschulter 31, so daß eine möglicherweise gefährlich werdende Querschnittsverminderung vermieden wird. Die Länge des Zwischenabschnittes 22′, hier dargestellt durch den Pfeil 23′, beträgt mehr als das 3fache der Differenz der lichten Weite 9′, 24′ der beiden angrenzenden zylindrischen Bohrungsabschnitte 20′, 25′. Diese Differenz kann auch an der eingezeichneten Strecke 26′ abgelesen werden. In diesem Ausführungsbeispiel ist der Zwischenabschnitt 22′ als kreisbogenförmig gekrümmte Fläche ausgebildet, die in dem der Schweißnaht 4′ zugewandten zylindrischen Bohrungsabschnitt 20′ tangential übergeht. Der Radius 29′ dieser kreisbogenförmig gekrümmten Fläche beträgt mindestens 150 mm.

## Patentansprüche

1. Bohrrohr (1) mit an den zu einem Anstauchkopf (8,8′) angestauchten Enden angeschweißten Verbindern (2,18), die einen verdickten Zangenanschlagsbereich (27) aufweisend als Zapfen- und Muffenelement ausgebildet mittels ihrer komplementär konisch ausgebildeten Gewindeabschnitte (14) mit komplementären Elementen von anderen Bohrrohren verschraubbar sind und deren lichte Weite (9) kleiner ist als die des unverformten Rohres (3), wobei die Rohrenden hinsichtlich der Anstauchung gleich ausgebildet sind und einen zwischen der zylindrischen Bohrung (5,5′,7,7′) des unverformten Rohres (3) und des Anstauchkopfes (8,8′) liegenden Zwischenabschnitt (10,10′) mit einer in Richtung Schweißnaht (4) abnehmenden lichten Weite aufweisen und der als Muffe ausgebildete Verbinder (2) am Übergang vom Schweißnahtbereich zum verdickten Zangenanschlagsbereich (27) an der Außenseite mit einer Schulter (16,19,31) versehen ist,
**dadurch gekennzeichnet,**
- daß die Länge (12,12′) des Zwischenabschnittes (10,10′) im Rohr (3) mehr als das 20 fache der halben Differenz der lichten Weite (11,11′) der beiden angrenzenden zylindrischen Bohrungsabschnitte (5,7,5′,7′) beträgt und der Übergang vom zylindrischen Bohrungsabschnitt (5,5′) des unverformten Rohres (3) zum genannten Zwischenabschnitt (10,10′) stark abgerundet (13,13′) ist und
- daß der als Zapfenelement ausgebildete Verbinder (18) einen von der Schweißnaht (4) beginnend zylindrischen Bohrungsabschnitt (20), dessen lichte Weite (9) gleich der des Anstauchkopfes (8) des angeschweißten Rohres (3) ist und einen daran anschließenden im wesentlichen im Zangenanschlagsbereich (27) liegenden Zwischenabschnitt (22) mit in Richtung Gewindeabschnitt (21) abnehmender lichter Weite und einen bis zum Anfang des Gewindeabschnittes (21) sich erstreckenden weiteren zylindrischen Bohrungsabschnitt (25) aufweist, wobei die Länge (23) dieses Zwischenabschnittes (22) mehr als das 6fache der halben Differenz der lichten Weite (26) der beiden angrenzenden zylindrischen Bohrungsabschnitte (20,25) beträgt und mindestens der Übergang zu dem der Schweißnaht (4) zugewandten zylindrischen Bohrungsabschnitt (20) stark abgerundet ist und
- daß der Sprung in der lichten Weite (11,11′) im Anstauchbereich des Rohres (3) wesentlich kleiner ist als der Sprung (26) im als Zapfenelement ausgebildeten Verbinder (18) und
- daß der als Muffenelement ausgebildete Verbinder (2) eine durchgehende bis zum Übergang zum Gewindeabschnitt (14) sich erstreckende zylindrische Bohrung (15) aufweist, deren lichte Weite (9′) gleich der des Anstauchkopfes (8′) des angeschweißten Rohres (3) ist.

2. Bohrrohr nach Anspruch 1,
**dadurch gekennzeichnet,**
daß der Außendurchmesser des Rohres (3) im Anstauchbereich gleich und die Anstauchung nur radial nach innen gerichtet ist.

3. Bohrrohr nach Anspruch 1,
**dadurch gekennzeichnet,**
daß die Anstauchung am Rohrende radial nach innen und nach außen gerichtet ist, wobei die axiale Erstreckung der äußeren (17,17′) Anstauchung kürzer ist als die der inneren (30,30′).

4. Bohrrohr nach Anspruch 3,
**dadurch gekennzeichnet,**
daß der Betrag der radial nach innen (11,11′) gerichteten Anstauchung größer ist als der der nach außen (28,28′) gerichteten.

5. Bohrrohr nach Anspruch 1,
**dadurch gekennzeichnet,**
daß der Abrundungsradius (13,13′) an der inneren Übergangsstelle vom unverformten Rohr (3) zum Zwischenabschnitt (10,10′) mindestens 300 mm und der an der inneren Übergangsstelle von dem der Schweißnaht (4) zugewandten zylindrischen Bohrungsabschnitt (20) zum zwischenabschnitt (22) in dem als Zapfen element (18) ausgebildeten Verbinder mindestens 150 mm beträgt.

6. Bohrrohr nach Anspruch 1,
**dadurch gekennzeichnet,**
daß der Zwischenabschnitt (22) in dem als Zapfenelement ausgebildeten Verbinder (18) kegelstumpfförmig ausgebildet ist.

7. Bohrrohr nach Anspruch 1,
**dadurch gekennzeichnet,**
daß der Zwischenabschnitt (22) in dem als Zapfen ausgebildeten Verbinder (18) im Querschnitt kreisbogenförmig gekrümmt ist und tangential in die der Schweißnaht (4) zugewandten zylindrischen Bohrung (20) übergeht.

8. Bohrrohr nach Anspruch 1,
**dadurch gekennzeichnet,**
daß der Sprung in der lichten Weite (11) im Anstauchbereich des Rohres (3) im Vergleich zu dem Sprung (26) in der lichten Weite in dem als Zapfenteil ausgebildeten Verbinder (18) in der Spanne zwischen 50 % bis 30 % geringer ist, wobei der Querschnitt im Anstauchkopf (8) mindestens das 1,5fache des Querschnittes des unverformten Rohres (3) beträgt.

9. Bohrrohr nach Anspruch 1,
**dadurch gekennzeichnet,**
- daß im Falle einer 90 Grad-Schulter (31) am als Muffenelement ausgebildeten Verbinder (2) dieser einen von der Schweißnaht (4′)beginnend zylindrischen Bohrungsabschnitt (20′), dessen lichte Weite (9′) gleich der des Anstauchkopfes (8′) des angeschweißten Rohres (3) ist und einen daran anschließenden von der Schweißnaht aus gesehen axial vor der Position der 90 Grad-Außenschulter (31) einsetzenden Zwischenabschnitt (22′) mit in Richtung Gewindeabschnitt (14) nicht durchgelienden zylindrischen Bohrung, sondern mit abnehmender lichter Weite und einen bis zum Übergang zum Gewindeabschnitt (14) sich erstreckenden weiteren zylindrischen Bohrungsabschnitt (25′) aufweist, wobei die Länge (23′) des genannten Zwischenabschnittes (22′) mehr als das 6fache der halben Differenz der lichten Weite (26′) der beiden angrenzenden zylindrischen Bohrungsabschnitte (20′,25′) beträgt und mindestens der Übergang zu dem der Schweißnaht (4′) zugewandten zylindrischen Bohrungsabschnitt (20′) stark abgerundet ist und
- daß der Sprung in der lichten Weite (11′) im Anstauchbereich des Rohres (3) gleich oder etwas kleiner ist als der Sprung (26′) in der lichten Weite in dem als Muffenelement ausgebildeten Verbinder (2), wobei der Querschnitt im Anstauchkopf (8′) mindestens das 1,5fache des Querschnittes des unverformten Rohres (3) beträgt.

10. Bohrrohr nach Anspruch 9,
**dadurch gekennzeichnet,**
daß der Zwischenabschnitt (22′) in dem als Muffe ausgebildeten Verbinder (2) im Querschnitt kreisbogenförmig gekrümmt ist und tangential in die der Schweißnaht (4′) zugewandten zylindrischen Bohrung (20′) übergeht.

11. Bohrrohr nach den Ansprüchen 7 und 10,
**dadurch gekennzeichnet,**
daß der Radius (29,25) der kreisbogenförmig gekrümmten Flächen der Zwischenabschnitte (22,22′) mindestens 150 mm beträgt.

## Claims

1. A borehole tube (1) with connectors (2, 18) welded on to the ends which have been upset to form an upset head (8, 8′), which connectors, having a thickened pincer stop region (27), designed as a pin and bushing element, by means of their complementarily conical threaded sections (14), can be screw-connected with complementary elements of other borehole tubes, and the internal width (9) of which is less than that of the non-shaped tube (3), the tube ends being identical with regard to the upsetting and an intermediate section (10, 10′) located between the cylindrical bore (5, 5′, 7, 7′) of the non-shaped tube (3) and of the upset head (8, 8′), which section has an internal width which decreases in the direction of the weld seam (4), and the connector (2) designed as a bushing being provided on the outside with a shoulder (16, 19, 31) at the transition from the weld seam region to the thickened pincer stop region (27),
characterised in that
- the length (12, 12′) of the intermediate section (10, 10′) in the tube (3) is more than 20 times half the difference between the internal widths (11, 11′) of the two adjoining cylindrical bore sections (5, 7, 5′, 7′) and the transition from the cylindrical bore section (5, 5′) of the non-shaped tube (3) to the afore-mentioned intermediate section (10, 10′) is greatly rounded off (13, 13′) and
- that the connector (18) designed as a pin element has a bore section (20) which is cylindrical starting from the weld seam (4), the internal width (9) of which is equal to that of the upset head (8) of the welded-on tube (3), and an intermediate section (22) adjoining thereon which is located essentially in the pincer stop region (27) and which has an internal width which decreases in the direction of the threaded section (21) and a further cylindrical bore section (25) extending as far as the start of the threaded section (21), the length (23) of this intermediate section (22) being more than 6 times half the difference between the internal widths (26) of the two adjoining cylindrical bore sections (20, 25) and at least the transition to the cylindrical bore section (20) facing the weld seam (4) being greatly rounded off and
- that the step in the internal width (11, 11′) in the upset region of the tube (3) is substantially smaller than the step (26) in the connector (18) which is designed as a pin element and
- that the connector (2) which is designed as a bushing element has a continuous cylindrical bore (15) which extends as far as the transition to the threaded section (14), the internal width (9′) of which bore is equal to that of the upset head (8′) of the welded-on tube (3).

2. A borehole tube according to Claim 1, characterised in that the external diameter of the tube (3) in the upset region is the same and the upsetting is only directed radially inwards.

3. A borehole tube according to Claim 1, characterised in that the upsetting at the tube end is directed radially inwards and outwards, the axial extent of the outer upsetting (17, 17′) being shorter than that of the inner one (30, 30′).

4. A borehole tube according to Claim 3, characterised in that the amount of the upsetting directed radially inwards (11, 11′) is greater than that directed outwards (28, 28′).

5. A borehole tube according to Claim 1, characterised in that the radius of rounding (13, 13′) at the inner transition point from the non-shaped tube (3) to the intermediate section (10, 10′) is at least 300 mm and the at the inner transition point from the cylindrical bore section (20) facing the weld seam (4) to the intermediate section (22) in the connector designed as a pin element (18) is at least 150 mm.

6. A borehole tube according to Claim 1, characterised in that the intermediate section (22) in the connector (18) designed as a pin element is in the shape of a truncated cone.

7. A borehole tube according to Claim 1, characterised in that the intermediate section (22) in the connector (18) designed as a pin is curved in arcuate manner in cross-section and merges tangentially into the cylindrical bore (20) facing the weld seam (4).

8. A borehole tube according to Claim 1, characterised in that the step in the internal width (11) in the upset region of the tube (3) is between 50% and 30% less in spread than the step (26) in the internal width in the connector (18) designed as a pin element, the cross-section in the upset head (8) being at least 1.5 times the cross-section of the non-shaped tube (3).

9. A borehole tube according to Claim 1, characterised in that
- in the case of a 90-degree shoulder (31) on the connector (2) designed as a bushing element said shoulder has a cylindrical bore section (20′) starting from the weld seam (4′), the internal width (9′) of which is equal to that of the upset head (8′) of the welded-on tube (3) and an adjoining intermediate section (22′), viewed from the weld seam, which also starts before the position of the 90-degree external shoulder (31), which section has a cylindrical bore which is not continuous in the direction of the threaded section (14) but has a decreasing internal width, and an additional cylindrical bore section (25′) extending as far as the transition to the threaded section (14), the length (23′) of the afore-mentioned intermediate section (22′) being more than 6 times half the difference between the internal widths (26′) of the two adjoining cylindrical bore sections (20′, 25′) and at least the transition to the cylindrical bore region (20′) facing the weld seam (4′) being greatly rounded off and
- that the step in the internal width (11′) in the upsetting region of the tube (3) is equal to or somewhat smaller than the step (26′) in the internal width in the connector (2) designed as a bushing element, the cross-section in the upset head (8′) being at least 1.5 times the cross-section of the non-shaped tube (3).

10. A borehole tube according to Claim 9, characterised in that the intermediate section (22′) in the connector (2) which is designed as a bushing is curved in arcuate manner in cross-section and merges tangentially into the cylindrical bore (20′) facing the weld seam (4′).

11. A borehole tube according to Claims 7 and 10, characterised in that the radius (29, 25) of the surfaces of the intermediate sections (22, 22′) which are curved in arcuate manner is at least 150 mm.

## Revendications

1. Tube de forage (1), comportant des raccords (2,18), soudés aux extrémités refoulées en une tête de refoulement (8,8′), qui, présentant une zone de butée épaissie (27) réalisée en tant qu'élément de tourillon et élément de manchon, peuvent être vissés à des éléments complémentaires d'autres tubes de forage, au moyen de leurs tronçons filetés (14) coniques et complémentaires, et dont la largeur intérieure (9) est plus petite que celle du tube non déformé (3), les extrémités du tube, en ce qui concerne le refoulement, étant réalisées de façon identique et présentant un tronçon intermédiaire (10,10′) se trouvant entre le perçage cylindrique (5,5′,7,7′) du tube non déformé (3) et la tête de refoulement (8,8′), ayant une largeur intérieure diminuant en direction de la soudure (4), et le raccord (2) réalisé en tant que manchon, au niveau de la transition de la zone de la soudure à la zone de butée épaissie (27), étant munie, sur sa face externe, d'un épaulement (16,19,31),
caractérisé en ce que :
- la longueur (12,12′) du tronçon intermédiaire (10,10′) dans le tube (3) vaut plus de vingt fois la demi-différence de la largeur intérieure (11,11′) des deux tronçons de perçage cylindriques voisins (5,7,5′,7′), et la transition du tronçon de perçage cylindrique (5,5′) du tube non déformé (3) audit tronçon intermédiaire (10,10′) est fortement arrondie (13,13′), et
- le raccord (18) réalisé en tant qu'élément de tourillon présente un tronçon de perçage cylindrique (20) commençant à partir de la soudure (4), dont la largeur intérieure (9) est identique à celle de la tête de refoulement (8) du tube soudé (3), et un tronçon intermédiaire (22) s'y raccordant et se trouvant généralement dans la zone de butée (27), ayant une largeur intérieure diminuant en direction du tronçon fileté (21), et un autre tronçon de perçage cylindrique (25) s'étendant jusqu'au début du tronçon fileté (21), la largeur (23) de ce tronçon intermédiaire (22) valant plus de 6 fois la demi-différence de la largeur intérieure (26) des deux tronçons de perçage cylindriques voisins (20,25) et au moins la transition au tronçon de perçage cylindrique (20) proche de la soudure (4) étant fortement arrondie, et
- la différence des largeurs intérieures (11,11′) dans la zone de refoulement du tube (3) étant bien plus petite que la différence (26) dans le raccord (18) réalisé en tant qu'élément de tourillon, et
- le raccord (2) réalisé en tant qu'élément de manchon présente un perçage continu cylindrique (15) s'étendant jusqu'à la transition au tronçon fileté (14), perçage dont la largeur intérieure (9′) est identique à celle de la tête de refoulement (8) du tube soudé (3).

2. Tube de forage selon la revendication 1,
caractérisé en ce que le diamètre externe du tube (3) est identique dans la zone de refoulement, et le refoulement est uniquement dirigé radialement vers l'intérieur.

3. Tube de forage selon la revendication 1,
caractérisé en ce que le refoulement à l'extrémité du tube est dirigé radialement vers l'intérieur et vers l'extérieur, l'extension axiale du refoulement extérieur (17,17′) étant plus faible que celle du refoulement intérieur (30,30′).

4. Tube de forage selon la revendication 3,
caractérisé en ce que la valeur du refoulement dirigé radialement vers l'intérieur (11,11′) est plus grande que celle du refoulement dirigé vers l'extérieur (28,28′).

5. Tube de forage selon la revendication 1,
caractérisé en ce que le rayon de l'arrondi (13,13′) à l'endroit de la transition interne du tube non déformé (3) au tronçon intermédiaire (10,10′) vaut au moins 300 mm, et celui à l'endroit de la transition interne du tronçon de perçage cylindrique (20) proche de la soudure (4) au tronçon intermédiaire (22) dans le raccord réalisé en tant qu'élément de tourillon (18) vaut au moins 150 mm.

6. Tube de forage selon la revendication 1,
caractérisé en ce que le tronçon intermédiaire (22) dans le raccord (18) réalisé en tant qu'élément de tourillon présente une forme tronconique.

7. Tube de forage selon la revendication 1,
caractérisé en ce que le tronçon intermédiaire (22) dans le raccord (18) réalisé en tant qu'élément de tourillon est cintré, en section transversale, en forme d'arc de cercle, et se fond tangentiellement dans le perçage cylindrique (20) proche de la soudure (4).

8. Tube de forage selon la revendication 1,
caractérisé en ce que le saut dans la largeur intérieure (11) dans la zone de refoulement du tube (3) est de 50 % à 30 % plus faible par rapport au saut dans la largeur intérieure (26) dans le raccord (18) réalisé en tant qu'élément de tourillon, la section transversale dans la tête de refoulement (8) valant au moins 1,5 fois la section transversale du tube non déformé (3).

9. Tube de forage selon la revendication 1,
caractérisé en ce que :
- dans le cas d'un épaulement (31) à 90° sur le raccord (2) réalisé en tant qu'élément de manchon, celui-ci présente un tronçon de perçage cylindrique (20′) commençant depuis la soudure (4′), dont la largeur intérieure (9′) est identique à celle de la tête de refoulement (8′) du tube soudé (3), et un tronçon intermédiaire (22′) s'y raccordant disposé devant l'épaulement (31) à 90° par rapport à la soudure, ayant un perçage cylindrique non continu en direction du tronçon fileté (14), mais à largeur intérieure décroissante, et un autre tronçon de perçage cylindrique (25′) s'étendant jusqu'à la transition au tronçon fileté (14), la longueur (23′) dudit tronçon intermédiaire (22′) valant plus de 6 fois la demi-différence de la largeur intérieure (26′) des deux tronçons de perçage cylindriques voisins (20′,25′) et au moins la transition au tronçon de perçage cylindrique (20′) proche de la soudure (4′) étant fortement arrondie, et
- le saut dans la largeur intérieure (11′) dans la zone de refoulement du tube (3) est identique ou quelque peu inférieur au saut (26′) dans la largeur intérieure dans le raccord (2) réalisé en tant qu'élément de manchon, la section transversale dans la tête de refoulement (8′) valant au moins 1,5 fois la section transversale du tube non déformé (3).

10. Tube de forage selon la revendication 9,
caractérisé en ce que le tronçon intermédiaire (22′) dans le raccord (2) réalisé en tant qu'élément de manchon présente, en section transversale, une forme d'arc de cercle et se fond tangentiellement dans le perçage cylindrique (20′) proche de la soudure (4′).

11. Tube de forage selon les revendications 7 et 10,
caractérisé en ce que le rayon (29,25) des surfaces cintrées en arc de cercle des tronçons intermédiaires (22,22′) vaut au moins 150 mm.
